**Europäisches Patentamt**

**European Patent Office**

**Office européen des brevets**

(11) Numéro de publication: **0 168 076**

**B1**

# (12) FASCICULE DE BREVET EUROPÉEN

(45) Date de publication du fascicule du brevet:
13.09.89

(51) Int. Cl.⁴: **G 06 F 13/42**

(21) Numéro de dépôt: **85200878.8**

(22) Date de dépôt: **05.06.85**

(54) **Circuit d'interface du type esclave.**

(30) Priorité: **08.06.84 FR 8409063**

(43) Date de publication de la demande:
**15.01.86 Bulletin 86/3**

(45) Mention de la délivrance du brevet:
**13.09.89 Bulletin 89/37**

(84) Etats contractants désignés:
**DE FR GB IT**

(56) Documents cité:
**ELECTRONIC COMPONENTS AND APPLICATIONS, vol. 3, no. 1, novembre 1980, pages 38-46, Eindhoven, NL; A.P.M. MOELANDS: "Serial I/O with the MAB8400 series microcomputers"
ELONCO BULLETIN, no. 114, juin 1983, pages 2-6, Eindhoven, NL; "Samenwerking Philips en Intel. Twee nieuwe "bussen", CMOS-technologie en "CLIPS""
MINI-MICRO CONFERENCE RECORD, mai 1984, pages 23/5.1 - 23/5.10, New York, US; R.L. MITCHELL: "Super serial systems"**

(73) Titulaire: **RTC- COMPELEC, 130, Avenue Ledru-Rollin, F-75011 Paris (FR)**
(84) Etats contractants désignés: **FR**

(73) Titulaire: **N.V. Philips' Gloeilampenfabrieken, Groenewoudseweg 1, NL- 5621 BA Eindhoven (NL)**
(84) Etats contractants désignés: **DE GB IT**

(72) Inventeur: **Barbu, Stefan, SOCIETE CIVILE S.P.I.D. 209 rue de l'Université, F-75007 Paris (FR)**
Inventeur: **Valkestijn, Léo, SOCIETE CIVILE S.P.I.D. 209 rue de l'Université, F-75007 Paris (FR)**
Inventeur: **Van de Kerkhof, F.A.M., SOCIETE CIVILE S.P.I.D. 209 rue de l'Université, F-75007 Paris (FR)**

(74) Mandataire: **Jacquard, Philippe, SOCIETE CIVILE S.P.I.D. 209, rue de l'Université, F-75007 Paris (FR)**

## Description

L'invention concerne un circuit d'interface du type esclave destiné à la commutation d'une pluralité de voies et comprenant des entrées logiques susceptibles de recevoir des signaux de données et d'horloge fournies par un bus, un registre pour recevoir les signaux reçus du bus par les entrées logiques et une mémoire des données reçues par le registre.

Un tel circuit est connu du brevet européen 51332 au nom de N.V. Philips'Gloeilampenfabrieken publié le 11 avril 1984, sous la forme d'une station adressable notamment soit comme maître soit comme esclave, et qui est mise en oeuvre dans un système bus à deux fils, du type série.

Dans un certain nombre d'applications et notamment en télévision, on met couramment en oeuvre un ou plusieurs circuits d'interface entre le récepteur et une prise de péritélévision. Les circuits généralement connus pour cette application réalisent des commutations de manière classique et ne peuvent être commandés à partir d'un bus.

L'invention se propose de réaliser un circuit d'interface qui puisse être commandé à partir d'un bus, notamment du type précité, mais qui soit néanmoins utilisable, quant à au moins une partie de ses fonctions, dans un environnement où les commutations sont réalisées de manière classique.

Dans ce but, l'invention est caractérisée en ce qu'elle comporte

- un premier décodeur commandant la commutation de voies à partir de signaux logiques stockés dans la mémoire.
- une pluralité d'entrées d'adressage susceptibles d'être mises chacune à un niveau logique, de manière à générer une adresse affichée
- un second décodeur identifiant si ladite adresse affichée correspond à un premier état de fonctionnement du circuit, en ligne avec ledit bus ou à un second état, hors ligne à partir de signaux logiques de commande appliqués directement sur les entrées logiques
- un bloc d'aiguillage dirigeant les signaux disponibles sur les entrées logiques soit sur ledit registre si ladite adresse affichée correspond à un fonctionnement en ligne avec ledit bus (premier état), soit sur le premier décodeur de manière à commander directement la commutation d'au moins une partie desdites voies à partir desdits signaux logiques de commande si ladite adresse affichée correspond à un fonctionnement hors ligne (second état).
- un circuit de blocage comportant une première série de portes logiques inhibant le passage des signaux logiques stockés dans la mémoire vers ledit premier décodeur lorsque le circuit est dans son second état de fonctionnement (hors ligne).

Le circuit selon l'invention peut être rendu inactif grâce à une seconde série de portes logiques inhibant le passage des signaux logiques disponibles en sortie du premier décodeur vers les voies à commuter en présence d'un signal logique dit d'arrêt du circuit d'interface.

Le circuit peut être initialisé grâce à un générateur d'impulsion produisant, lors de la mise sous tension du circuit, une impulsion produisant l'initialisation de la mémoire et d'au moins une partie du registre.

Selon un mode de réalisation préféré, le circuit est tel que, dans son premier état il fonctionne avec un bus série et il est caractérisé en ce que le registre est un registre à décalage recevant en série à une entrée située à une extrémité amont des informations logiques série fournies par le bus sous forme de cycles présentant chacun au moins une séquence et cadencées par un signal d'horloge fourni par le bus lorsque le circuit est dans son premier état, et produisant à une sortie située à une extrémité aval un signal d'acceptation de fin de séquence introduit à l'entrée d'une première bascule de contrôle cadencée par ledit signal d'horloge et dont la sortie cadence une seconde bascule de contrôle dite pointeur dont la sortie inversée est bouclée sur son entrée, en ce que la présence d'un niveau logique 1 à la sortie de la première bascule et à la sortie inversée du pointeur autorise une initialisation dudit registre, par exemple par la mise à l'état 1 de sa première bascule et remise zéro ses autres bascules, en ce qu'il comporte un comparateur logique identifiant, dans une partie donnée d'une séquence d'adresse des informations logiques série fournies par le bus si ladite séquence d'adresse correspond à ladite adresse affichée, et produisant un signal logique d'identification, en ce qu'il comporte un circuit pour mémoriser ledit signal d'identification, et en ce qu'il comporte une porte autorisant le chargement dans la mémoire des données du registre lorsque la sortie de la première bascule de contrôle et du pointeur sont à l'état logique 1, lorsqu'est présent un dit signal d'identification mémorisé ainsi qu'un dit signal d'acceptation de fin de séquence, lequel correspond de ce fait à la fin d'une séquence de données qui suit ladite séquence d'adresse.

Selon un mode de réalisation, on initialise le registre entre la séquence d'adresse et la séquence de données, en produisant une mise à l'état 1 de la première bascule du registre et une remise à zéro de ses autres bascules lorsque la sortie de la première bascule de contrôle est à l'état 1 et la sortie du pointeur à l'état zéro.

Selon une variante avantageuse, le bus fournit, conformément à la procédure décrite dans le brevet européen précité, une information de départ et d'arrêt d'un cycle d'informations fournies par le bus à l'aide de relations logiques entre les signaux d'information et d'horloge.

Le circuit comporte alors une troisième et une quatrième bascule de contrôle qui, lorsque le circuit d'interface est dans son premier état, reçoivent à leur entrée le signal d'horloge et sont cadencées l'une par le signal d'informations et l'autre par son inverse de telle sorte que la sortie de la troisième bascule soit mise à l'état 1 par un premier type de coïncidence entre les signaux d'horloge et d'informations correspondant au départ d'un dit cycle, et la quatrième bascule soit mise à l'état 1 par un second type de coïncidence entre les signaux d'horloge et d'informations correspondant à la fin d'un cycle, la troisième bascule étant remise à zéro par l'inverse du signal d'horloge et la quatrième bascule par la sortie de la troisième, la sortie de la quatrième bascule étant agencée de manière à produire, lorsqu'elle se trouve à l'état logique 1, une initialisation du registre par mise à l'état 1 de sa première bascule et remise à zéro de ses autres bascules.

On peut avantageusement mettre à l'état logique 1 la quatrième bascule lorsque, après une séquence d'adresse aucune identification n'a été mémorisée. Pour ce faire, le circuit est agencé pour que la quatrième bascule ait sa sortie mise à l'état logique lorsque le signal d'identification mémorisé est à l'état logique 0 et lorsque la première bascule a sa sortie à l'état logique 1, ceci produisant en conséquence une initialisation du registre.

La quatrième bascule peut également avoir sa sortie mise à l'état logique 1 dans diverses configurations, notamment en présence d'une impulsion produite par le générateur d'impulsion ou bien lorsque la sortie des première et deuxième bascule et le signal d'horloge sont ensemble au niveau logique 1 (fin de cycle).

Selon un mode de réalisation, le circuit pour mémoriser le signal d'identification comporte deux portes ET inverseuses dont la sortie de l'une est bouclée sur une des entrées de l'autre et vice versa, l'autre entrée de la première des deux portes ET inverseuses recevant l'inverse du signal d'identification, mais seulement si le pointeur a sa sortie à l'état logique 0 et si le signal d'horloge est à l'état logique 1, l'autre entrée de la seconde des deux portes ET inverseuses recevant le produit logique des inverses des sorties de la troisième et de la quatrième bascule de manière à permettre lors de chaque cycle la mémorisation du signal d'identification.

Dans le but de dialoguer avec le bus en vue de l'acceptation d'une séquence de données qui suit une séquence d'adresse, le circuit comporte avantageusement une bascule d'acceptation cadencée par le signal d'horloge et recevant à son entrée le produit logique du signal d'acceptation et du signal d'identification mémorisé, et produisant à la sortie en direction du bus un signal d'autorisation. Cette bascule d'acceptation peut également être remise à zéro par ladite impulsion. Ladite impulsion peut également remettre à zéro la première bascule de contrôle et mettre à l'état 1 la quatrième bascule de contrôle.

Selon un mode de réalisation convenant au-cas d'un bus série à deux fils, le circuit est caractérisé en ce qu'il comporte deux entrées logiques susceptibles d'être reliées dans le premier état du circuit, à un bus délivrant un signal d'information et un signal d'horloge, en ce que la mémoire comporte une pluralité de bascules de mémoire, et en ce que la première série de portes logiques du circuit d'aiguillage comporte une troisième et une quatrième porte ET inverseuse dont une entrée est reliée respectivement à la sortie de deux desdites bascules de mémoire et l'autre entrée reçoit du second décodeur un signal de niveau logique 1 dans le premier état du circuit et 0 dans le second état, la sortie de la troisième et de la quatrième porte ET inverseuse étant reliée respectivement à une entrée d'un cinquième et d'une sixième porte ET inverseuse dont la sortie est reliée au premier décodeur, et en ce que l'autre entrée de la cinquième et de la sixième porte ET inverseuse reçoit la sortie respectivement d'une huitième et d'une neuvième porte ET inverseuse validant les signaux disponibles sur les entrées logiques lorsque le circuit est dans son second état.

L'invention sera mieux comprise à la lecture de la description qui va suivre donnée à titre d'exemple non limitatif, en liaison avec les figures qui représentent:

- la figure 1, un diagramme général d'un dispositif selon l'invention;
- la figure 2, un schéma du récepteur bus de la figure 1;
- la figure 3, un mode de réalisation de la logique d'aiguillage et de la mémoire de la figure 1;
- la figure 4, un mode de réalisation du récepteur bus de la figure 1;
- et les figures 5a et 5b, respectivement un cycle fourni par le bus et un diagramme temporel des principaux signaux de la figure 4.

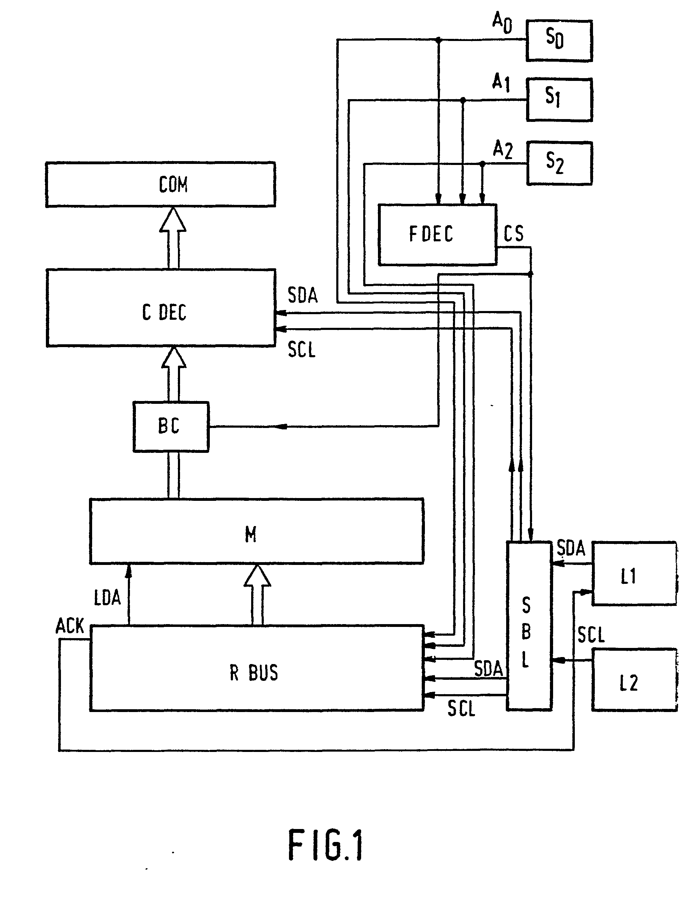

Selon la figure 1, le circuit d'interface comporte des entrées d'adressage $S_0$, $S_1$, $S_2$ susceptible chacune d'être reliée par câblage soit à un potentiel donné, par exemple la tension d'alimentation du circuit, soit à la masse de manière à générer une adresse $A_0$, $A_1$ et $A_2$ dont chaque bit est codé soit 0 soit 1. Une telle adresse peut être également générée à partir d'une logique multi-états et un décodage.

L'adresse affichée, $A_0$, $A_1$, $A_2$ est introduite a l'entrée d'un décodeur de fonction FDEC produisant à sa sortie un signal logique d'état de fonctionnement CS qui dépend de l'état de fonctionnement du circuit auquel correspond l'adresse affichée. Par exemple, on peut choisir que toutes les adresses sauf une (P. ex. 111) correspondent à un fonctionnement du circuit d'interface en ligne avec un bus, (premier état), l'adresse restante (p.ex. 111) correspondant à un fonctionnement du circuit hors ligne (second état) à partir de signaux logiques appliqués directement à certaines de ses entrées.

Le signal logique de commutation CS est appliqué à un bloc d'aiguillage SBL qui reçoit également les signaux SDA et SCL correspondant aux niveaux logiques respectivement d'entrées $L_1$ et $L_2$.

Si l'adresse affichée $A_0$, $A_1$, $A_2$ correspond à un fonctionnement en ligne avec un bus, les signaux appliqués aux entrées $L_1$ et $L_2$ sont fournis par le bus, SDA étant alors un signal d'informations et SCL un signal d'horloge. Le bloc d'aiguillage SBL est commandé par le signal logique de commutation CS de manière à diriger les signaux SDA et SCL vers un récepteur bus RBUS destiné à réaliser certaines opérations logiques et notamment à vérifier si l'adresse affichée $A_0$, $A_1$, $A_2$ correspond ou non à une adresse codée présente dans le signal envoyé par le bus. Le récepteur bus RBUS reçoit l'adresse affichée $A_0$, $A_1$, $A_2$ de manière à effectuer cette vérification.

Dans l'affirmative, et sous réserve d'autres opérations logiques, le récepteur bus RBUS émet un signal d'acceptation ACK et autorise grâce à un signal de chargement LDA, le chargement de données transmises par le bus dans une mémoire M. La mémoire M commande une série de commutateurs COM par l'intermédiaire d'un décodeur de commutation CDEC.

Dans la négative, c'est un autre terminal qui a été adressé et le récepteur bus n'est plus actif: aucun chargement en mémoire ne peut se produire.

Si l'adresse affichée $A_0$, $A_1$, $A_2$ correspond à un fonctionnement hors ligne, les signaux appliqués aux entrées $L_1$, $L_2$ sont des signaux logiques de commande, que le bloc de commutation SBL envoie directement au décodeur de commutation CDEC. Ainsi, selon l'invention, on utilise les entrées $L_1$ et $L_2$ pour deux fonctions différentes. Ceci permet à un seul circuit d'interface, notamment un circuit intégré, de répondre par simple affichage d'une adresse $A_0$, $A_1$, $A_2$ à toutes les utilisations possible d'une gamme de produits, dont les plus performants sont commandés par microprocesseur et bus, et les autres de manière classique.

Le signal logique d'état de fonctionnement CS est également envoyé à un circuit de blocage BC verrouillant le passage des données de la mémoire M au décodeur de commutation CDEC lorsque l'adresse affichée $A_0$, $A_1$, $A_2$ correspond à un fonctionnement hors ligne.

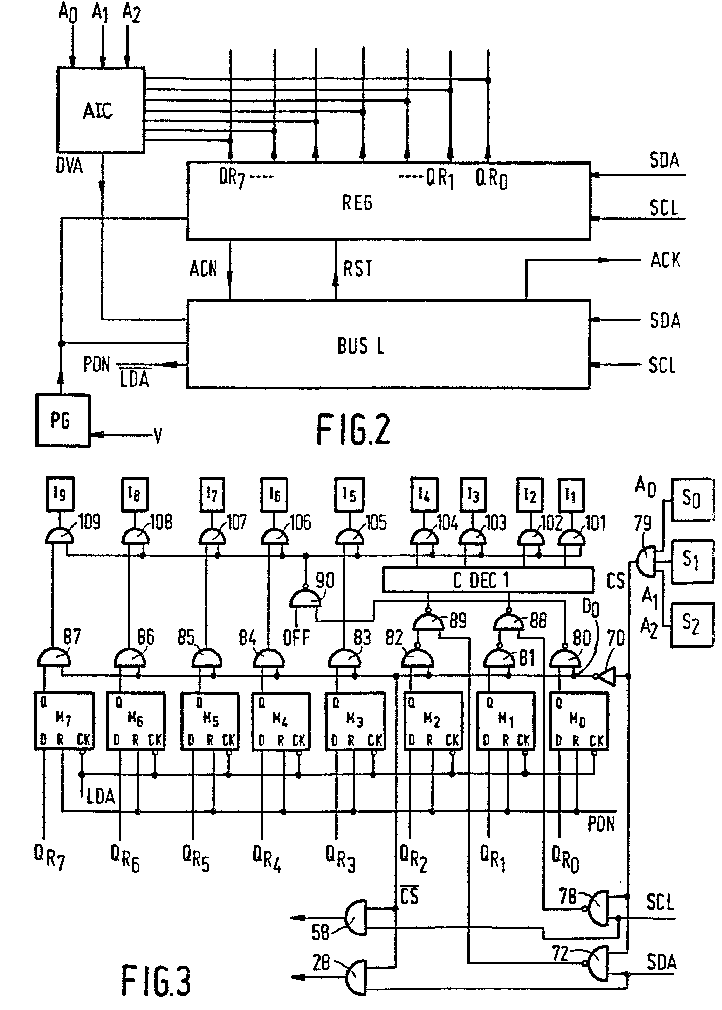

Selon la figure 2, le récepteur bus RBUS comporte une logique bus BUSL, un registre REG et un contrôleur de séquence d'adresse AIC.

Le registre REG reçoit du bus le signal d'informations logiques SDA sous forme de cycles présentant chacun une séquence d'adresse et une séquence de données et un signal d'horloge SCL.

Le circuit d'identification de séquence d'adresse AIC reçoit des signaux sortants du registre REG ainsi que les signaux $A_0$, $A_1$, $A_2$ corrépondant à l'adresse affichée. Il effectue une comparaison logique entre tous ces signaux d'une part pour identifier si l'adresse affichée $A_0$, $A_1$, $A_2$ correspond à l'adresse envoyée par le bus et d'autre part pour reconnaître un drapeau toujours identique envoyé dans la séquence d'adresse d'un cycle, ceci ayant pour but de détecter des erreurs éventuelles de transmission des signaux. Le circuit d'identification de séquence d'adresse AIC produit à sa sortie un signal logique d'identification DVA, qui est reçu par la logique bus BUSL.

La logique BUS BUSL reçoit également le signal d'informations logiques SDA et le signal d'horloge SCL, notamment pour reconnaître le début et la fin de chaque cycle. Il reçoit en outre un signal d'acceptation de fin de séquence ACN qui est produit par le registre REG lorsque l'ensemble des bits d'une séquence ont été reçus par le registre REG.

La logique bus BUSL gère alors le circuit à partir de trois signaux logiques:

a) un signal de remise à zéro RST1 du registre REG qui est produit au début de chaque séquence ou au cas où l'adresse n'est pas reconnue ou en cas de défaut

b) un signal d'autorisation ACK émis en direction du bus (entrée $L_1$) confirmant l'acceptation par la logique d'une séquence et autorisant l'envoi par le bus de la séquence suivante.

c) un signal LDA ordonnant le chargement des données du registre REG dans la mémoire M.

Lors de la mise sous tension du circuit d'interface, la tension d'alimentation V est avantageusement appliquée à un générateur d'impulsion PG, lequel produit une impulsion PON d'initialisation de là logique bus BUSL, du registre REG, ainsi que de la mémoire M.

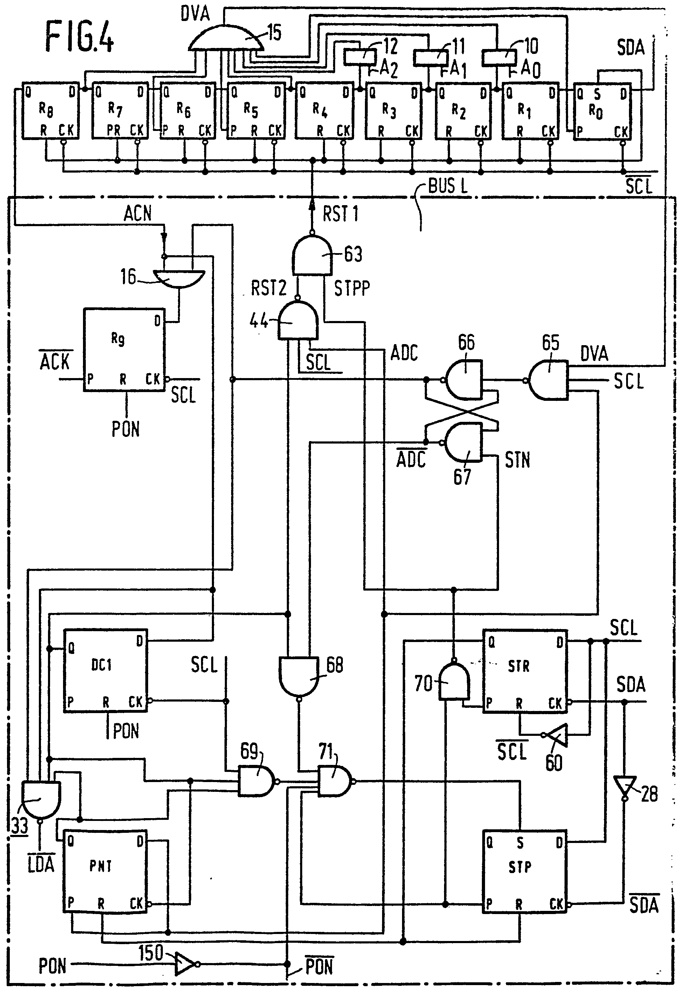

Selon la figure 3, la mémoire M comporte huit bascules $M_0$ à $M_7$ de type D, le circuit de blocage BC huit portes ET et ET inverseuses 80 à 87, le bloc d'aiguillage SBL quatre portes ET inverseuses 72, 78, 88 et 89 et deux portes ET 28 et 58, le décodeur de fonction FDEC consiste en une porte ET 79, et le décodeur de commutation CDEC se décompose en un décodeur CDEC 1 traitant les informations des mémoires $M_1$ et $M_2$, et en une commande directe à partir des autres mémoires $M_3$ à $M_7$. Le bloc de commutation COM consiste en neuf interrupteurs commandés $I_1$ à $I_9$. Plus spécifiquement, chacune des bascules $M_0$ à $M_7$ reçoit à son entrée D une sortie respectivement $QR_0$ à $QR_7$ du registre REG, celui-ci étant constituée par exemple comme on le verra à la figure 4 par un registre à décalage comportant des bascules $R_0$ à $R_7$ recevant les informations logiques SDA en série. Chacune des bascules $M_0$ $M_7$ reçoit à son entrée de cadencement CK l'inverse $\overline{LDA}$ du signal de chargement des données en mémoire. Quand LDA passe à l'état 1 autorisant le chargement, $\overline{LDA}$ passe à zéro, produisant un front descendant rendant actives les entrées CK des bascules $M_0$ à $M_7$. En outre, les bascules $M_0$ à $M_7$ reçoivent sur leur entrée de remise à zéro R l'impulsion PON produite lors de la mise sous tension.

On a choisi arbitrairement que l'adresse affi-

chée 111 = ($A_0 = A_1 = A_2 = 1$) correspondait à un fonctionnement hors ligne. Cette condition est détectée par la porte ET 79 dont la sortie produit le signal logique d'état de fonctionnement ES dont la valeur est 0 pour les 7 adresses affichées correspondant au fonctionnement du circuit d'interface selon le premier état, en ligne avec le bus, et 1 pour l'adresse 111 correspondant au fonctionnement selon le second état, hors ligne.

L'aiguillage est alors réalisé de la manière suivante:

Le signal CS, inversé par un inverseur 70 est appliqué à une des entrées de deux portes ET 58 et 28 dont l'autre entrée reçoit respectivement le signal SCL et le signal SDA fournis par les entrées respectivement $L_2$ et $L_1$. Pour les 7 adresses affichées correspondant au premier état, les portes 58 et 28 laissent passer les signaux SCL et SDA en direction du récepteur bus RBUS. Le signal CS inversé par l'inverseur 70 est également appliqué à une des entrées de chacune d'une série de portes ET 83 à 87 et ET inverseuses 80 à 82. L'autre entrée de portes 80 à 87 reçoit la sortie Q respectivement des bascules $M_0$ à $M_7$. Pour les 7 adresses affichées correspondant au premier état, les portes 80 à 87 valident le passage des informations en mémoire dans les bascules $M_0$ à $M_7$ vers la sortie des portes 80 à 87. La sortie respectivement des portes ET inverseuses 81 et 82 est reliée à une entrée respectivement de deux portes ET inverseuses 88 et 89 dont l'autre entrée est reliée à la sortie de deux portes ET inverseuses respectivement 78 et 72. La porte ET inverseuse 78 reçoit à une entrée le signal SCL fourni par $L_2$ et à son autre entrée le signal d'état de fonctionnement CS, appliqué également à une des entrées de la porte ET inverseuse 72. L'autre entrée de cette dernière reçoit de $L_1$ le signal SDA.

Lorsque CS = 0 (premier état) les sorties des portes 72 et 78 sont à l'état 1 et valident le passage des informations de la sortie des portes 81 et 82 vers le décodeur CDEC1.

Lorsque CS = 1 (second état), les portes 28 et 58 sont bloquées, et les portes 72 et 78 laissent passer les signaux logiques SCL et SDA correspondant cette fois à des niveaux logiques appliqués sur les entrées $L_1$ et $L_2$. Un 1 logique est présent à la sortie des portes 81 et 82 et valide le passage de SCL et SDA à travers les portes 88 et 89, de manière à attaquer directement le décodeur CDEC1.

Neuf interrupteurs commandés $I_1$ à $I_9$ reçoivent la sortie de neuf portes ET 101 à 109 dont une entrée reçoit la sortie d'une porte ET inverseuse 90. L'autre entrée des portes ET 101 à 104 reçoit une sortie du décodeur CDEC1, et celle des portes ET 105 à 109, la sortie des portes 83 à 87.

Lorsque la sortie de la porte ET inverseuse 90 est à l'état 1 (cas normal OFF = 0) les portes 101 à 109 valident la commande des interrupteurs $I_1$ à $I_9$. Dans le premier état, $M_1$ à $M_7$ commandent les interrupteurs $I_1$ à $I_9$, et dans le second état, les niveaux logiques SCL et SDA appliqués directement aux deux entrées du décodeur CDEC1

commandent les interrupteurs $I_1$ à $I_4$, selon quatre configurations possibles par exemple la fermeture de l'un d'entre eux à la fois.

Comme on l'expliquera dans la suite de la description, on réserve la bascule $M_0$ à la mémorisation d'un état de validation $D_0$ d'une commande d'arrêt OFF. La sortie de la porte ET inverseuse 80 est appliquée à une entrée de la porte ET inverseuse 90 dont l'autre entrée reçoit ladite commande OFF. Si $Q(M_0) = 0$, la sortie de la porte 80 est au niveau 1 et valide le passage de la commande d'arrêt OFF à travers la porte 90. La sortie des portes 101 à 109 est alors à 0 et désactive les interrupteurs $I_1$ à $I_9$.

Comme l'autre entrée de la porte ET inverseuse 80 reçoit le signal CS inversé par 70, si CS = 0 (premier état), la sortie de la porte 80 est déterminée par $Q(M_0)$ et si CS = 1 (second état), le passage de la commande d'arrêt (OFF) est toujours validé.

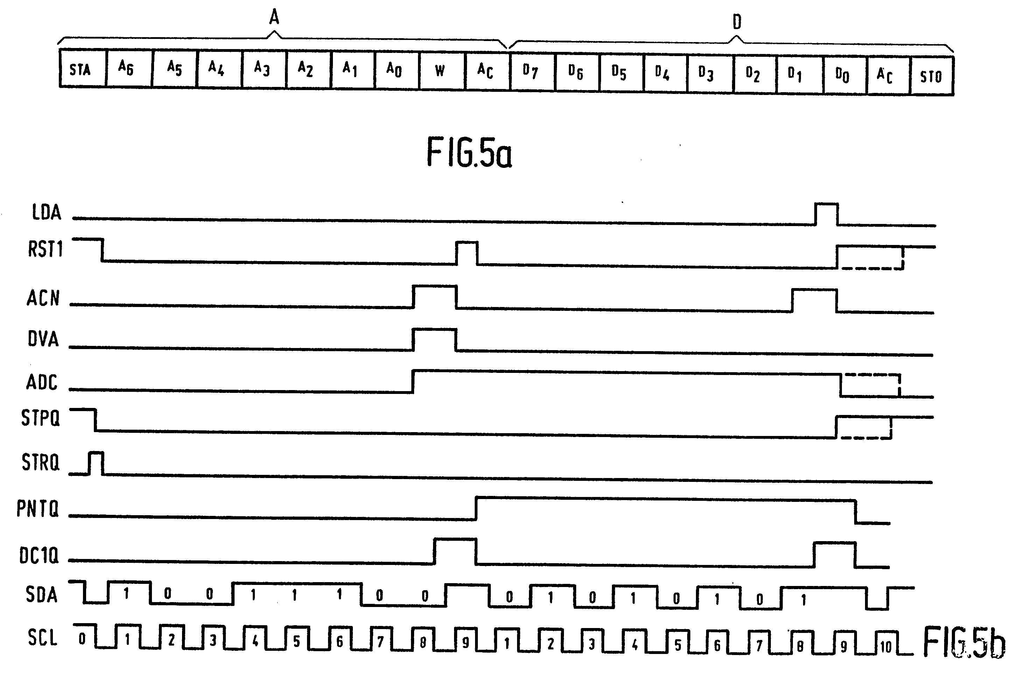

Selon la figure 4, le registre REG est un registre à décalage constitué de 9 bascules de type D $R_0...R_8$, chargeant sur un front descendant appliqué à leur entrée de cadencement CK. La sortie Q des registres $R_0$ à $R_7$ est relié à l'entrée D de la bascule suivante, respectivement $R_1$ à $R_8$. Chacune des bascules $R_0$ à $R_8$ est cadencée à son entrée CK par l'intermédiaire $\overline{SEL}$ du signal d'horloge SCL de manière à fonctionner sur les fronts montants du signal d'horloge SCL. La bascule $R_0$ est mise à l'état 1 (entrée 5) et les bascules $R_1$ à $R_8$ sont remises à zéro par un signal d'initialisation RST1 disponible à la sortie d'une porte ET inverseuse 63. Avant chaque cycle, le signal RST1 effectue une initialisation. D'où il résulte $R_0(Q) = 1$. Ceci correspond temporellement au bit de départ STA du cycle type représenté à la figure 5a. Le registre à décalage, cadencé par $\overline{SEL}$ reçoit tous les bits de la séquence d'adresse A. Le positionnement correct de cette séquence dans le registre à décalage intervient lorsque le 1 logique introduit dans $R_0$ lors de l'initialisation passe dans $R_8$. Alors, le bit $A_6$ est stocké dans $R_7$ et ainsi de suite jusqu'à $A_0$ qui est stocké dans $R_1$. Le bit W est toujours égal à zéro. Les bits $A_2$, $A_1$ et $A_0$ de la séquence vont être comparés terme à terme aux bits de même nom de l'adresse affichée grâce à trois portes NON OU exclusives 10, 11 et 12. La porte 10 reçoit à ses entrées $A_0$ et $Q(R_1)$, la porte 11, $A_1$ et $Q(R_2)$ et la porte 12, $A_2$ et $Q(R_3)$. Si l'adresse $A_0$, $A_1$, $A_2$ envoyée dans la séquence A d'adresse est identique avec l'adresse affichée, chacune des portes 10, 11 et 12 produit en sortie un 1 logique. Sur l'exemple de réalisation de la figure 4, on a également supposé que les bits $A_6$, $A_5$, $A_4$, $A_3$ constituaient un drapeau d'identification toujours identique selon la séquence 1001. Par conséquent, l'identification complète d'une séquence d'adresse est réalisée par une porte ET multiple 15 produisant à sa sortie un signal d'identification DVA et recevant à ses entrées les sorties $Q(R_7)$ et $Q(R_4)$ et les sorties inversées $P(R_5)$ et $P(R_6)$ et avantageusement $P(R_0)$ ainsi que les sorties des portes 10, 11 et 12. Les portes 10, 11, 12 et 15 constituent le circuit d'identification de séquence d'adresse AIC. D'autre part, la sortie Q(R$_8$) produit un signal logique d'acceptation de fin de séquence ACN. Le signal W qui suit A$_0$ dans la séquence d'adresse est par convention un zéro.

La partie inférieure de la figure 4, encadrée par un trait mixte, constitue la logique bus BUSL.

Elle comporte une première bascule de contrôle DC1 recevant à son entrée D le signal ACN disponible à la sortie Q de R$_8$, et à son entrée de cadencement CK le signal d'horloge SCL, et une deuxième bascule de contrôle PNT dite pointeur dont la sortie inverseuse P est bouclée sur l'entrée D, son entrée de cadencement CK étant reliée à la sortie Q de la première bascule DC1. Le pointeur PNT a pour fonction d'indiquer si on se trouve dans une séquence d'adresse ou de données d'un cycle.

Une troisième STR et une quatrième STP bascule de contrôle ont pour fonction de gérer le départ et la fin d'un cycle. Le bus indique le départ d'un cycle (voir figure 5b) par une transition du niveau 1 au niveau 0 du signal SDA lorsque le signal d'horloge SCL est au niveau 1, et la fin d'un cycle par une transition du niveau 0 au niveau 1 du signal SDA lorsque le signal d'horloge SCL est au niveau 1. Par contre, les transitions porteuses d'information du signal SDA ont lieu lorsque le signal d'horloge SCL est au niveau logique 0. La quatrième bascule STP a pour fonction d'indiquer si le circuit est dans un état actif vis à vis du bus ou inactif. Dans ce dernier cas, sa sortie initialise le registre R.

La troisième bascule STR reçoit à son entrée D le signal d'horloge SCL et est cadencée à son entrée de cadencement CK par le signal SDA de manière à détecter le départ d'un cycle, alors que la quatrième bascule STP reçoit à son entrée D le signal d'horloge SCL et à son entrée de cadencement CK le signal $\overline{SDA}$ inversé à partir de SDA par un inverseur 28, de manière à détecter la fin d'un cycle. La sortie Q de la troisième bascule STR est appliquée à l'entrée R de remise à zéro du pointeur PNT et de la quatrième bascule STP. La troisième bascule STR est remise à zéro par l'inverse $\overline{SCL}$ du signal d'horloge SCL obtenu par l'inverseur 60 dont la sortie est reliée à l'entrée R de STR. Le signal d'autorisation DVA produit en sortie de la porte 15 est mémorisé par une bascule RS à deux portes ET inverseuses 66 et 67 bouclées l'une sur l'autre, c'est-à-dire que la sortie des portes 66 et 67 est reliée respectivement à une entrée des portes 67 et 66. Cette mémorisation est autorisée par une porte ET inverseuse 65 et a lieu lorsque DVA = 1, SCL = 1 et PNT Q (sortie du pointeur) = 0. Cette dernière condition indique que l'on est dans la partie adresse d'un cycle et évite toute identification accidentelle dans une séquence de données. La porte ET inverseuse 65 reçoit donc à ses entrées les signaux DVA et SCL et la sortie inverseuse P du pointeur PNT, et sa sortie est reliée à l'autre entrée de la porte ET inverseuse 66. D'autre part, l'autre entrée de la porte ET inverseuse 67 reçoit un signal STN disponible à la sortie d'une porte ET 70 dont les entrées sont reliées respectivement aux sorties inverseuses P des bascules de contrôle STR et STP. Tant que STN = 1, le signal DVA qui est fugitif, reste mémorisé sous forme du signal ADC à la sortie de la porte 66. Le retour de STN à l'état 0 équivaut à l'effacement de cette mémorisation. L'initialisation des bascules R$_0$ à R$_8$ est réalisée par le signal RST1 disponible à la sortie d'une porte ET inverseuse 63 qui reçoit à une entrée le signal de sortie STN de la porte ET 70 (initialisation quand STRQ ou STPQ = 1), et à son entrée un signal RST2 disponible à la sortie d'une porte ET inverseuse 44. Celle-ci reçoit à ses trois entrées le signal d'horloge SCL, la sortie Q de la première bascule de contrôle DC1, et la sortie inversée P du pointeur PNT.

Les bascules R$_0$ à R$_8$ sont initialisées lorsque la bascule STP mémorise un état inactif du circuit (STPP), ou bien entre une séquence d'adresses et une séquence de données (RST2), ainsi qu'en début de cycle (porte ET 70).

Une bascule R$_9$ génère à sa sortie P un signal logique d'autorisation inversé $\overline{ACK}$, c'est-à-dire que l'acceptation correspond à un 0 logique. La bascule R$_9$ est cadencée à son entrée d'autorisation de chargement CK par le signal d'horloge SCL et reçoit à son entrée D la sortie d'une porte ET 16 dont une entrée reçoit le signal d'acceptation de fin de séquence ACN, et l'autre le signal d'identification mémorisé ADC.

Le chargement des bascules de mémoire M$_0$ à M$_7$ est obtenu par un signal de chargement inversé $\overline{LDA}$ appliqué à leurs entrées d'autorisation de chargement CK. Ledit chargement est obtenu par passage de $\overline{LDA}$ de l'état 1 à l'état 0. Le signal $\overline{LDA}$ est obtenu à la sortie d'une porte ET inverseuse 33 dont les entrées reçoivent le signal d'acceptation de fin de séquence ACN, le signal d'identification mémorisé ADC, et les sorties Q de la première bascule DC1 et du pointeur PNT. Le chargement est donc autorisé lorsqu'une fin de séquence de données a été détectée, alors que préalablement, une séquence d'adresse correspondant à celle affichée par le circuit a été identifiée.

La quatrième bascule STP est mise à l'état 1 par la sortie d'une porte ET inverseuse 71 à quatre entrées. Sa première entrée reçoit la sortie inversée P de STP (auto-entretien de l'état 1 de STP) et sa seconde entrée l'inverse $\overline{PON}$ de l'impulsion $\overline{PON}$ produite lors de la mise sous tension. (mise à l'état 1 de STP à la mise sous tension).

Sa troisième entrée reçoit la sortie d'une porte ET inverseuse 69 dont les entrées sont SCL, la sortie Q de DC1, et la sortie Q du pointeur PNT (mise à l'état 1 de STP en fin de cycle, même en cas de défaillance du bus). Sa quatrième entrée reçoit la sortie d'une porte ET inverseuse 68 dont les entrées sont la sortie Q de DC1 et l'inverse $\overline{ADC}$ de ADC, disponible à la sortie de la porte ET inverseuse 67 (mise à l'état 1 de STP si à la fin d'une séquence d'adresse, aucun signal d'identification n'a été produit et mémorisé).

On remarquera enfin que l'impulsion PON produite lors de la mise sous tension du circuit, remet également à zéro (entrée R) la première bascule de contrôle DC1 et la bascule $R_9$.

En liaison avec les figures 5a et 5b, on va maintenant décrire le fonctionnement du circuit lors d'un cycle d'informations fourni par le bus, et correspondant à l'adresse affichée $A_0$, $A_1$, $A_2$ aux entrées $S_0$, $S_1$ et $S_2$ du circuit.

La condition de départ STA correspond à un front descendant de SDA avec SCL = 1. Ceci est détecté par STR dont la sortie STRQ passe à l'état 1 sur ledit front descendant de SDA, ce passage à l'état 1 ayant également pour effet de remettre à zéro la sortie STPQ de STP et de PNT et de faire ADC = 0 car STN = 0 et DVA = 0. A ce moment, la sortie P de STP passe à l'état 1 (STPQ = 0) et RST1 à l'état 0 également. Grâce à l'initialisation au préalable, la bascule $R_0$ est à ce moment à l'état 1, et les bascules $R_1$ à $R_8$ à l'état 0. La sortie Q de STR est remise à zéro par le front descendant du coup d'horloge SCL de départ. Le bus envoie la séquence A d'adresses, jusqu'à ce que $R_8$ reçoive par décalage le 1 logique inscrit dans $R_0$ lors de l'initialisation, ce qui entraîne ACN = 1 sur le front montant du 8ième coup d'horloge. Le bit $A_6$ est alors positionné dans $R_7$ et ainsi de suite jusqu'à $A_0$ positionné dans $R_1$, et W = 0 (par convention) dans $R_0$. L'adresse envoyée par le bus correspondant avec celle affichée par le circuit, la porte ET 15 envoie un DVA = 1, lequel est autorisé par la porte 65, car la sortie P du pointeur PNT est à l'état 1, à partir du huitième coup d'horloge SCL. ADC passe à l'état 1. Au coup d'horloge suivant, DVA passe de nouveau à 0, mais ADC reste au niveau 1 car les sorties P de STR et STP sont toutes deux aux niveau 1, donc STN = 1.

La présence simultanée de ACN et ADC, détectée par la porte 16 produit à la sortie P de $R_9$ le signal $\overline{ACK}$ sur le front descendant du 8ième coup d'horloge, celui-ci se trouvant effacé par le font descendant du 9ième coup d'horloge, car à ce moment la sortie de la porte 16 est à zéro: ACK est donc un signal identique à ACN, mais retardé d'un demi-coup d'horloge. Il est donc présent lorsque l'horloge est à son niveau haut du 9ième coup, donc dans l'espace prévu à cet effet entre la séquence A d'adresse et la séquence D de données. La manière dont le système bus traite ce signal ACK est décrite dans le brevet européen précité.

Le signal ACN met également à l'état 1 la bascule DC1 (DC1Q) sur le front descendant du huitième coup d'horloge. DC1Q repasse à 0 sur le front descendant du neuvième coup d'horloge, car ACN est repassé à 0 sur le front montant de ce même coup d'horloge. Ce front descendant de DC1Q fait passer la sortie du pointeur PNT à l'état 1 (PNT Q = 1). Le pointeur PNT mémorise ainsi que l'on va maintenant recevoir la séquence de données D du cycle.

Pendant la durée du neuvième coup d'horloge SCL, on a SCL = 1, DC1Q = et PNTQ = 0, d'où RST1 = 1, ce qui entraîne l'initialisation du registre R, $R_0$ étant à l'état 1, et $R_1$ à $R_8$ à l'état 0.

L'arrivée de la séquence de données intervient donc avec ADC = 1 et PNT = 1.

Comme pour la séquence A d'adresse, le 1 logique inscrit dans $R_0$, lors de l'initialisation est transféré par décalage jusqu'au registre $R_8$ de manière à produire un ACN = 1 sur le front montant du 8ième coup d'horloge de la séquence D, ACN revenant à 0 sur le front montant du coup d'horloge suivant. Le bit $D_7$ est alors stocké en $R_7$ et ainsi de suite jusqu'au $D_0$ qui se trouve stocké dans $R_0$. On a alors DC1Q = 1 sur le front descendant du huitième coup d'horloge de la séquence D, DC1Q revenant à 0 sur le front descendant du coup d'horloge suivant.

Entre le font descendant du huitième coup d'horloge de la séquence D et le front ascendant suivant, on a simultanément DC1Q = PNTQ = ACN = ADC = 1, d'où LDA = 1 pendant la durée d'un demi-coup d'horloge. Le contenu de $R_0$ à $R_7$ est transféré en parallèle dans les bascules de mémoire $M_0$ à $M_7$. En particulier, $M_0$ reçoit de $R_0$ le bit $D_0$, en principe un 0 permettant de valider la commande OFF à l'entrée de la porte 90 (figure 3).

La position ouverte ou fermée des interrupteurs $I_1$ à $I_9$ est alors modifiée conformément au nouveau contenu des ménoires $M_0$ à $M_7$, si la commande OFF est inactive ou inhibée par $D_0$.

Comme pour la séquence d'adresse A, $R_9$ produit un signal ACK = 1 entre le front descendant du huitième et celui du neuvième coup d'horloge de la séquence D. Le passage à zéro de DC1Q sur le front descendant du neuvième coup d'horloge de la séquence D entraîne la remise à zéro du pointeur (PNPQ = 0). En fin de cycle, le bus envoie un signal d'arrêt constitué par un front SDA montant sur un signal d'horloge SCL au niveau 1, ce qui entraîne STPQ = 1, d'où STN = 0, donc ADC = 0, et RST1 = 1 (initialisation du registre R). Un mode perfectionné du circuit d'interface selon l'invention prévoit le cas où le bus serait défaillant quant à la production d'un tel signal d'arrêt.

Dans ce but, on met à profit le fait que, dans la phase terminale d'un cycle, on a transitoirement et de manière caractéristique DC1Q = PNTQ = 1. La porte 69 met alors à l'état 1 (STPQ = 1) la bascule STP sur le front ascendant du neuvième coup d'horloge de la séquence D.

Le signal d'arrêt fourni par le bus consiste en un front montant sur le signal SDA, pendant que SCL = 1 sur le dixième coup d'horloge de la séquence D. Il est détecté par la bascule STP qui se met à l'état 1 (STPQ = 1), dans les variantes du circuit ne présentant pas de porte 69. Ceci est représenté en pointillé à la figure 5b, également en ce qui concerne les signaux ADC et RST1.

L'invention ne se limite pas aux modes de réalisation décrits ou représentés. Ainsi, on peut relier directement la sortie inversée P de la bascule de contrôle STR à l'entrée correspondante de la porte ET inverseuse 63, l'utilisation de la porte ET 70 présentant cependant l'avantage d'initialiser le registre REG en cas de présence intempestive d'une coïncidence correspondant au départ d'un cycle, alors qu'un tel cycle est en cours de déroulement. D'autre part, toutes les bascules de type D de la description ont été choisies du type se chargeant sur un front descendant appliqué à leur entrée de cadencement CK. Il va de soi que des bascules se chargeant sur un front ascendant pourraient également être mises en oeuvre.

**Revendications**

1. Circuit d'interface du type esclave destiné à la commutation d'une pluralité de voies et comprenant des entrées logiques susceptibles de recevoir des signaux d'information et d'horloge fournies par un bus, un registre (REG) pour recevoir les signaux (SDA, SCL) reçus du bus par des entrées logiques ($L_1$, $L_2$) et une mémoire (M) des données reçues par le registre (REG) caractérisé en ce qu'il comporte:

- un premier décodeur (CDEC) commandant la commutation de voies à partir de signaux logiques stockés dans la mémoire (M)
- une pluralité d'entrées d'adressage ($S_0$, $S_1$, $S_2$) susceptibles d'être mises chacune à un niveau logique, de manière à générer une adresse affichée ($A_0$, $A_1$, $A_2$)
- un second décodeur (FDEC) identifiant si ladite adresse affichée correspond à un premier état de fonctionnement du circuit, en ligne avec ledit bus ou à un second état, hors ligne à partir de signaux logiques de commande appliqués directement sur les entrées logiques ($L_1$, $L_2$)
- un bloc d'aiguillage (SBL) dirigeant les signaux disponibles sur les entrées logiques ($L_1$, $L_2$) soit sur ledit registre (R) si ladite adresse affichée correspond à un fonctionnement en ligne avec ledit bus (premier état) soit sur le premier décodeur (CDEC) de manière à commander directement la commutation d'au moins une partie desdites voies ($I_1$,... $I_9$) à partir desdits signaux logiques de commande si ladite adresse affichée correspond à un fonctionnement hors ligne (second état)
- un circuit de blocage (BC) comportant une première série de portes logiques (80 - 87) inhibant le passage des signaux logiques stockés dans la mémoire vers ledit premier décodeur (CDEC) lorsque le circuit est dans son serond état de fonctionnement (hors ligne).

2. Circuit d'interface selon la revendication 1, caractérisé en ce qu'il comporte une seconde série de portes logiques (101, 109) inhibant le passage des signaux logiques disponibles en sortie du premier décodeur (CDEC) vers les voies à commuter en présence d'un signal logique dit d'arrêt du circuit d'interface (OFF).

3. Circuit d'interface selon une des revendications précédentes caractérisé en ce qu'il comporte un générateur d'impulsion (PG) produisant, lors de la mise sous tension du circuit, une impulsion (PON) produisant l'initialisation de la mémoire (M) et d'au moins une partie du registre (REG).

4. Circuit d'interface selon une des revendications précédentes caractérisé en ce que ledit registre est un registre à décalage ($R_0$, $R_7$) recevant en série à une entrée située à une extrémité amont des informations logiques série (SDA) fournies par le bus sous forme de cycles présentant chacun au moins une séquence et cadencées par un signal d'horloge (SCL) fourni par le bus lorsque le circuit est dans son premier état, et produisant à une sortie ($QR_8$) située à une extrémité aval un signal d'acceptation de fin de séquence (ACN) introduit à l'entrée (D) d'une première bascule de contrôle ($DC_1$) cadencée (CK) par ledit signal d'horloge (SCL) et dont la sortie (Q) cadence (CK) une seconde bascule de contrôle dite pointeur (PNT) dont la sortie inversée (P) est bouclée sur son entrée (D), en ce que la présence d'un niveau logique 1 à la sortie (Q) de la première bascule (DC1) et à la sortie (P) du pointeur (PNT) autorise une initialisation dudit registre, par exemple par la mise à l'état 1 de sa première bascule et remise à zéro de ses autres bascules en ce qu'il comporte un comparateur logique (10, 11, 12) identifiant, dans une partie donnée d'une séquence d'adresse des informations logiques série fournies par le bus si ladite séquence d'adresse correspond à ladite adresse affichée, et produisant un signal logique d'identification (DVA), en ce qu'il comporte un circuit (66, 67) pour mémoriser ledit signal d'identification (DVA), et en ce qu'il comporte une porte ET (33) autorisant le chargement dans la mémoire (M) des données du registre (R) lorsque la sortie (Q) de la première bascule de contrôle ($DC_1$) et du pointeur (PNT) sont à l'état logique 1, lorsqu'est présent un dit signal d'identificaton mémorisé (ADC) ainsi qu'un dit signal d'acceptation de fin de séquence (ACN), lequel correspond de ce fait à la fin d'une séquence de données qui suit ladite séquence d'adresse.

5. Circuit d'interface selon la revendication 4, caractérisé en ce qu'il est agencé de manière à produire ladite initialisation par mise à l'état 1 de la première bascule ($R_0$) du registre (R) et remise zéro à de ses autres bascules ($R_1$...$R_8$) lorsque la sortie de la première bascule de contrôle ($DC_1$) est à l'état 1 et la sortie (Q) du pointeur (PNT) à l'état zéro.

6. Circuit d'interface selon une des revendications 4 ou 5 caractérisé en ce qu'il comporte une troisième (STR) et une quatrième (STP) bascule de contrôle qui, lorsque le circuit d'interface est dans son premier état, reçoivent à leur entrée (D) le signal d'horloge (SCL) et sont cadencées (CK) l'une par le signal d'informations (SDA) et l'autre par son inverse ($\overline{SDA}$) de telle sorte que la sortie (Q) de la troisième bascule (STR) soit mise à l'état 1 par un premier type de coïncidence entre les signaux d'horloge (SCL) et d'informations (SDA) correspondant au départ d'un dit cycle, et la quatrième bascule (STP) soit mise à l'état 1 par un second type de coïncidence entre les signaux d'horloge (SCL) et d'informations (SDA) correspondant à la fin d'un cycle, la troisième bascule (STR) étant remise à zéro par l'inverse ($\overline{SCL}$) du signal d'horloge (SCL) et la quatrième bascule (STP) par la sortie (Q) de la troisième (STR), la sortie (Q) de la quatrième bascule (STP) étant agencée de manière à produire, lorsqu'elle se trouve à l'état logique 1, une mise à l'état 1 de la première bascule ($R_0$) du registre (R) et la remise à zéro de ses autres bascules ($R_1...R_8$).

7. Circuit d'interface selon la revendication 6 caractérisé en ce que la quatrième bascule (STP) a sa sortie mise à l'état logique 1 lorsque le signal d'identification mémorisé (ADC) est à l'état logique 0 et lorsque la première bascule ($DC_1$) a sa sortie à l'état logique 1.

8. Circuit d'interface selon une des revendications 4 à 7 caractérisé en ce que le circuit pour mémoriser le signal d'identification (DVA) comporte deux portes ET inverseuses (66, 67) dont la sortie de l'une est bouclée sur une des entrées de l'autre et vice versa, l'autre entrée de la première des deux portes ET inverseuses (66) recevant l'inverse ($\overline{DVA}$) du signal d'identification (DVA), mais seulement si le pointeur (PNT) a sa sortie à l'état logique 0 et si le signal d'horloge est à l'état logique 1, l'autre entrée de la seconde des deux portes ET inverseuses (67) recevant le produit logique des inverses (P) des sorties (Q) de la troisième (STR) et de la quatrième bascule (STP), de manière à permettre lors de chaque cycle la mémorisation (ADC) du signal d'identification (DVA).

9. Circuit d'interface selon la revendication 3 en combinaison avec une des revendications 6 à 8 caractérisé en ce que la quatrième bascule (STP) a également sa sortie (Q) mise à l'état logique 1 par ladite impulsion (PON), sa sortie étant par ailleurs auto-entretenue lorsqu'elle se trouve à l'état 1.

10. Circuit d'interface selon une des revendications 7 à 9, caractérisé en ce qu'il est agencé de manière que la quatrième bascule (STP) ait également sa sortie mise à l'état logique 1 lorsque la sortie des première ($DC_1$) et deuxième (PNT) bascule et le signal d'horloge (SCL) sont ensemble au niveau logique 1.

11. Circuit d'interface selon une des revendications 4 à 10 caractérisé en ce qu'il comporte une bascule d'acceptation ($R_9$) cadencée par le signal d'horloge (SCL) et recevant à son entrée le produit logique du signal d'acceptation (ACN) et du signal d'identification mémorisé (ADC), et produisant à sa sortie en direction du bus un signal d'autorisation (ACK).

12. Circuit d'interface selon les revendications 3 et 11 prises ensemble, caractérisé en ce qu'il est agencé de manière que ladite impulsion produise également la remise à zéro de la bascule d'acceptation ($R_9$).

13. Circuit d'interface selon les revendications 3, 4 et 6 prises ensemble caractérisé en ce qu'il est agencé de manière que ladite impulsion produise également la remise à zéro de la première bascule de contrôle ($DC_1$) et la mise à l'état 1 de la quatrième bascule de contrôle (STP).

14. Circuit d'interface selon une des revendications 6 à 13, caractérisé en ce qu'il est agencé de manière à produire une initialisation du registre (REG) lorsqu'au moins l'une des troisième (STR) et quatrième (STP) bascule de contrôle à sa sortie (Q) à l'état 1.

15. Circuit d'interface selon une des revendications précédentes caractérisé en ce qu'il comporte deux entrées logiques ($L_1$, $L_2$) susceptibles d'être reliées dans le premier état du circuit, à un bus délivrant un signal d'information (SCL) et un signal d'horloge (SDA), et en ce que la mémoire (M) comporte une pluralité de bascules de mémoire ($M_0...M_7$); en ce que la première série de portes logiques (80...87) du circuit d'aiguillage (SBL) comporte une troisième et une quatrième porte ET inverseuse (81, 82) dont une entrée est reliée respectivement à la sortie d'une première et d'une deuxième dites bascules de mémoire ($M_1$, $M_2$) et l'autre entrée reçoit du second décodeur (FDEC) un signal ($\overline{CS}$) de niveau logique 1 dans le premier état du circuit et 0 dans le second état, la sortie de la troisième et de la quatrième porte ET inverseuse étant reliée respectivement à une entrée d'une cinquième (88) et d'une sixième (89) porte ET inverseuse dont la sortie est reliée au premier décodeur (CDEC), et en ce que l'autre entrée de la cinquième (88) et de la sixième (89) porte ET inverseuse reçoit la sortie respectivement d'une huitième (78) et d'une neuvième (72) porte ET inverseuse validant les signaux (SCL, DSA) disponibles sur les entrées logiques ($L_1$, $L_2$) lorsque le circuit est dans son second état.

16. Circuit d'interface selon la revendication 2 en combinaison avec une des revendications 4 à 15, caractérisé en ce que ladite première série de portes logiques (80...87) comporte une dixième porte ET inverseuse (80) dont une entrée est reliée respectivement à la sortie d'une troisième bascule de mémoire ($M_0$) et l'autre entrée reçoit du second décodeur (FDEC) un signal ($\overline{CS}$) de niveau logique 1 dans le premier état du circuit et 0 dans le second état, et dont la sortie est reliée à l'entrée d'une porte de validation d'arrêt (90) de telle sorte que le signal logique d'arrêt (OFF) est validé ou non selon le contenu de la troisième bascule de mémoire ($M_0$) lorsque le circuit est dans son premier état et est toujours validé dans le second état.

## Patentansprüche

1. Schnittstellenschaltung vom Sklaventyp zum Umschalten zwischen einer Anzahl von Kanälen, und diese Schaltung enthält geeignete logische Eingänge für den Empfang über einen Bus zugeführter Daten- und Taktsignalen, ein Register (REG) für den Empfang der aus dem Bus über logische Eingänge ($L_1$, $L_2$) empfangenen Signale

(SDA, SCL) und einen Datenspeicher (M) für aus dem Register (REG) ankommende Daten, dadurch gekennzeichnet, daß die Schaltung folgende Elemente enthält:

- einen ersten Decoder (CDEC) zur Steuerung der Umschaltung von Kanälen mittels logischer Signale aus dem Speicher (M),
- eine Anzahl von Adressiereingängen ($S_0$, $S_1$, $S_2$), die zum Erzeugen einer angezeigten Adresse ($A_0$, $A_1$, $A_2$) auf je einen logischen Pegel gebracht werden können,
- einen zweiten Decoder (FDEC) zum Identifizieren, ob die angezeigte Adresse einem ersten (mit dem Bus leitungsverbundenen) Funktionszustand der Schaltung oder einem zweiten (lokalen) Zustand entspricht, wenn von direkt an die logischen Eingänge gelegten logischen Steuersignalen ($L_1$, $L_2$) ausgegangen wird,

eine Verteilereinheit (SBL), die die an den logischen Eingängen ($L_1$, $L_2$) zur Verfügung stehenden Signale entweder dem Register (R), wenn die angezeigte Adresse einem mit dem Bus leitungsverbundenen Betrieb (erstem Zustand) entspricht, oder dem ersten Decoder (CDEC) derart zuführt, daß er die Umschaltung wenigstens eines Teils der Kanäle ($I_1...I_9$) ausgehend von den logischen Steuersignalen direkt steuert, wenn die angezeigte Adresse einem lokalen Betrieb entspricht (zweitem Zustand),

- eine Sperrschaltung (BC) mir einer ersten Reihe logischer Gatter (80...87), die den Durchgang der logischen Signale aus dem Speicher nach dem ersten Decoder (CDEC) verhindern, während sich die Schaltung im ersten Betriebszustand befindet (lokal).

2. Schnittstellenschaltung nach Anspruch 1, dadurch gekennzeichnet, daß darin eine zweite Reihe logischer Gatter (101...109) vorgesehen ist, die den Durchgang der am Ausgang des ersten Decoders (CDEC) zur Verfügung stehenden logischen Signale nach den Schaltkanälen beim Erscheinen eines logischen Signals mit der Bezeichnung Schnittstellenschaltungsunterbrechung (OFF) verhindert.

3. Schnittstellenschaltung nach einem der vorangehenden Ansprüche, dadurch gekennzeichnet, daß darin ein Impulsgeber (PG) vorgesehen ist, der bei Spannungsbelastung der Schaltung einen Impuls (PON) erzeugt, der die Initialisierung des Speichers (M) und wenigstens eines Teils des Registers (REG) bewirkt.

4. Schnittstellenschaltung nach einem der vorangehenden Ansprüche, dadurch gekennzeichnet, daß das Register ein Schieberegister ($R_0...R_7$) ist, das seriell aus einem Bus auf einem an einem stromaufwärts liegenden Ende befindlichen Eingang serielle logische Informationen (SDA) als Zyklen empfängt, die je wenigstens eine Sequenz darstellen und durch ein Taktsignal (SCL) aus dem Bus getaktet werden, während die Schaltung sich im ersten Zustand befindet, und das auf einem an einem stromabwärts liegenden Ende befindlichen Ausgang ($QR_8$) ein Sequenzendefreigabesignal (ACN) erzeugt, das an den Eingang (D) eines ersten, vom Taktsignal (SCL) getakteten (CK) Steuerflipflops ($DC_1$) gelangt, dessen Ausgang (Q) einen zweiten, mit Positionsanzeiger (PNT) bezeichneten Steuerflipflop taktet (CK), dessen invertierter Ausgang (P) nach seinem Eingang (D) durchgeschleift ist, daß ein logischer Pegel 1 am Ausgang (Q) des ersten Flipflops ($DC_1$) und am Ausgang (P) des Positionsanzeigers (PNT) eine Initialisierung des Registers freigibt, beispielsweise durch die Zustandsänderung des ersten Flipflops nach dem Zustand 1 und durch die Nullrückstellung seiner anderen Flipflops, daß die Schaltung einen logischen Komparator (10, 11, 12) enthält, der in einem vorgegebenen Abschnitt einer Adreßsequenz der vom Bus gelieferten seriellen logischen Informationen identifiziert, ob die Adreßsequenz der angezeigten Adresse entspricht, und ein logischen Identifikationssignal (DVA) erzeugt, daß sie eine Schaltung (66, 67) zum Speichern des Identifikationssignal (DVA) enthält, und daß sie ein UND-Gatter (33) zum Genehmigen des Ladevorgangs der Daten des Registers (R) in den Speicher (M) enthält, während der Ausgang (Q) des ersten Steuerflipflops ($DC_1$) und des Positionsanzeigers (PNT) im logischen Zustand 1 stehen, wobei ein gespeichertes Identifikationssignal (ADC) sowohl als ein Sequenzendefreigabesignal (ACN) vorliegen, das hierdurch dem Datensequenzende entspricht, das der Adreßsequenz folgt.

5. Schnittstellenschaltung nach Anspruch 4, dadurch gekennzeichnet, daß sie die genannte Initialisierung durch Einstellung des Zustands 1 des ersten Flipflops ($R_0$) des Registers (R) und durch Nullrückstellung seiner anderen Flipflops ($R_1...R_8$) verwirklicht, wobei der Ausgang des ersten Steuerflipflops ($DC_1$) im Zustand 1 und der Ausgang (Q) des Positionsanzeigers (PNT) im Nullzustand stehen.

6. Schnittstellenschaltung nach Anspruch 4 oder 5, dadurch gekennzeichnet, daß darin ein dritter (STR) und ein vierter (STP) Steuerflipflop vorgesehen sind, die im ersten Zustand der Schnittstellenschaltung an ihrem Eingang (D) das Taktsignal (SCL) empfangen und einer durch das Informationssignal (SDA) und der andere durch das invertierte Informationssignal ($\overline{SDA}$) derart getaktet (CK) werden, daß der Ausgang (Q) des dritten Flipflops (STR) durch eine erste Koinzidenzart zwischen den Taktsignalen (SCL) und Informations-signalen (SDA) entsprechend dem Start eines genannten Zyklus in den Zustand 1 gebracht wird, und der vierte Flipflop (STP) durch eine zweite Koinzidenzart zwischen den Taktsignalen (SCL) und Informationssignalen (SDA) entsprechend dem Ende eines Zyklus in den Zustand 1 gebracht wird, wobei der dritte Flipflop (STR) durch das invertierte Taktsignal ($\overline{SCL}$) und der vierte Flipflop (STP) über den Ausgang (Q) des dritten (STR) auf Null zurückgestellt werden, wobei der Ausgang (Q) des vierten Flipflops (STP) derart ausgelegt ist, daß er im logischen Zustand 1 eine Einstellung des ersten Flipflops ($R_0$) des Registers (R) in den Zustand 1 und die Nullrückstellung seiner anderen Flipflops ($R_1...R_8$) verwirklicht.

7. Schnittstellenschaltung nach Anspruch 6, dadurch gekennzeichnet, daß der vierte Flipflop (STP) mit seinem Ausgang im logischen Zustand 1 steht, wobei das gespeicherte Identifikationssignal (ADC) den logischen Zustand 0 hat und der erste Flipflop ($DC_1$) mit seinem Ausgang im logischen Zustand 1 steht.

8. Schnittstellenschaltung nach einem der Ansprüche 4 bis 7, dadurch gekennzeichnet, daß die Schaltung zum Speichern des Identifikationssignal (DVA) zwei NICHT-UND-Gatter (66, 67) enthält, von denen der Ausgang des einen nach einem der Eingänge des anderen und umgekehrt durchgeschleift ist, wobei der andere Eingang des ersten der beiden NICHT-UND-Gatter (66) das invertierte Identifikationssignal ($\overline{DVA}$) empfängt, jedoch nur wenn der Positionsanzeiger (PNT) mit seinem Ausgang im logischen Zustand 0 und das Taktsignal im logischen Zustand 1 stehen, wobei der andere Eingang des zweiten der beiden NICHT-UND-Gatter (67) das logische Produkt der Invertierten (P) der Ausgänge (Q) des dritten (STR) und des vierten Flipflops (STP) derart empfängt, daß bei jedem Zyklus die Speicherung (ADC) des Identifikationssignals (DVA) ermöglicht wird.

9. Schnittstellenschaltung nach Anspruch 3 im Zusammenhang mit einem der Ansprüche 6 bis 8, dadurch gekennzeichnet, daß der vierte Flipflop (STP) ebenfalls mit seinem Ausgang (Q) durch den genannten Impuls (PON) in den logischen Zustand 1 gebracht wird, wobei sein Ausgang im Zustand 1 außerdem selbsthaltend ist.

10. Schnittstellenschaltung nach einem der Ansprüche 7 bis 9, dadurch gekennzeichnet, daß die Schaltung derart ausgelegt ist, daß der vierte Flipflop (STP) ebenfalls mit seinem Ausgang in den logischen Zustand 1 gebracht wird, wobei der Ausgang des ersten ($DC_1$) und des zweiten (PNT) Flipflops und das Taktsignal (SCL) beide auf dem logischen Pegel 1 liegen.

11. Schnittstellenschaltung nach einem der Ansprüche 4 bis 10, dadurch gekennzeichnet, daß die Schaltung einen vom Taktsignal (SCL) getakteten Freigabeflipflop ($R_9$) enthält und an ihrem Eingang das logische Produkt des Freigabesignals (ACN) und des gespeicherten Identifikationssignals (ADC) empfängt, und an seinem Ausgang in Busrichtung ein Genehmigungssignal (ACK) erzeugt.

12. Schnittstellenschaltung nach den zusammengenommenen Ansprüche 3 und 11, dadurch gekennzeichnet, daß die Schaltung derart ausgelegt ist, daß der genannte Impuls ebenfalls die Nullrückstellung des Freigabeflipflops ($R_9$) bewirkt.

13. Schnittstellenschaltung nach den zusammengenommenen Ansprüche 3, 4 und 6, dadurch gekennzeichnet, daß die Schaltung derart ausgelegt ist, daß der genannte Impuls ebenfalls die Nullrückstellung des ersten Steuerflipflops ($DC_1$) und die Einstellung des vierten Steuerflipflops (STP) in den Zustand 1 bewirkt.

14. Schnittstellenschaltung nach einem der Ansprüche 6 bis 13, dadurch gekennzeichnet, daß die Schaltung derart ausgelegt ist, daß eine Initialisierung des Registers (REG) verwirklicht wird, wobei wenigstens einer der dritten (STR) und vierten (STP) Steuerflipflops mit seinem Ausgang (Q) im Zustand 1 steht.

15. Schnittstellenschaltung nach einem oder mehreren der vorangehenden Ansprüche, dadurch gekennzeichnet, daß die Schaltung zwei logische Eingänge ($L_1$, $L_2$) enthält, die im ersten Zustand der Schaltung mit einem Bus verbunden werden können, der ein Informationssignal (SCL) und ein Taktsignal (SDA) liefert, und daß der Speicher (M) eine Anzahl von Speicherflipflops ($M_0...M_7$) enthält, daß die erste Reihe logischer Gatter (80...87) der Verteilereinheit (SBL) ein drittes und ein viertes NICHT-UND-Gatter (81, 82) enthalten, von denen ein Eingang mit dem Ausgang eines ersten bzw. eines zweiten der Speicherflipflops ($M_1$, $M_2$) verbunden ist und der andere Eingang aus dem zweiten Decoder (FDEC) ein Signal mit ($\overline{CS}$) dem logischen Wert 1 im ersten Zustand der Schaltung und 0 im zweiten Zustand empfängt, wobei der Ausgang des dritten und vierten NICHT-UND-Gatters mit einem Eingang eines fünften (88) und eines sechsten NICHT-UND-Gatters (89) verbunden ist, deren Ausgang mit einem ersten Decoder (CDEC) verbunden ist, und daß der andere Eingang des fünften (88) und des sechsten NICHT-UND-Gatters (89) das Ausgangssignal eines achten (78) und eines neunten NICHT-UND-Gatters (72) empfängt, wodurch die an den logischen Eingängen ($L_1$, $L_2$) im zweiten Zustand der Schaltung zur Verfügung stehenden Signale (SCL, DSA) freigegeben werden.

16. Schnittstellenschaltung nach Anspruch 2 in der Kombination mit einem der Ansprüche 4 bis 15, dadurch gekennzeichnet, daß die erste Reihe logischer Gatter (80...87) ein zehntes NICHT-UND-Gatter (80) enthält, dessen einer Eingang mit dem Ausgang eines dritten Speicherflipflops ($M_0$) verbunden ist und der andere Eingang aus dem zweiten Decoder (FDEC) ein Signal ($\overline{CS}$) mit dem logischen Wert 1 im ersten Zustand der Schaltung und 0 im zweiten Zustand empfängt, und dessen Ausgang mit dem Eingang eines Blockierungsfreigabegatters (90) derart verbunden ist, daß das logische Blockierungssignal (OFF) abhängig vom Inhalt des dritten Speicherflipflops ($M_0$) freigegeben wird oder nicht, wenn die Schaltung im ersten Zustand steht, und im zweiten Zustand immer freigegeben wird.

**Claims**

1. A slave-type interface circuit intended for the switching of a plurality of channels and comprising logic inputs capable of receiving information signals and clock signals supplied by a bus, a register (REG) for receiving the signals (SDA, SCL) received from the bus via the logic inputs ($L_1$, $L_2$), and a memory (M) for the data received by the register (REG), characterized in that the circuit comprises:

- a first decoder (CDEC) which controls the switching of the channels on the basis of logic signals stored in the memory (M),
- a plurality of addressing inputs $S_0$, $S_1$, $S_2$), each of which can be set to a logic level so as to generate a displayed address ($A_0$, $A_1$, $A_2$),
- a second decoder (FDEC) which signals whether said displayed address corresponds to a first operating state of the circuit, on line with said bus, or to a second state, off-line, on the basis of logic control signals applied directly to the logic inputs ($L_1$, $L_2$),
- a pointer block (SBL) which directs the signals available at the logic inputs ($L_1$, $L_2$) either to said register (R) if said displayed address corresponds to operation on-line with said bus (first state) or to the first decoder (CDEC) so as to control directly the switching of at least some of said channels ($l_1$,...$l_9$) on the basis of said logic control signals if said displayed address corresponds to off-line operation (second state),
- a blocking circuit (BC) which comprises a first series of logic gates (60 - 87) which inhibit the passage of the logic signals stored in the memory towards said first decoder (CDEC) when the circuit is in its second state of operation (off-line).

2. An interface circuit as claimed in Claim 1, characterized in that it includes a second series of logic gates (101, 109) which inhibit the passage of the logic signals available at the output of the first decoder (CDEC) towards the channels to be switched in the presence of a logic stop signal from the interface circuit (OFF).

3. An interface circuit as claimed in any one of the preceding Claims, characterized in that it includes a pulse generator (PG) which, when voltage is applied to the circuit, generates a pulse (PON) which causes the initialisation of the memory (M) and of at least a part of the register (REG).

4. An interface circuit as claimed in anyone of the preceding Claims, characterized in that said register is a shift register ($R_0$, $R_7$) which receives, in series at an input located at an upstream end, series logic information (SDA) supplied by the bus in the form of cycles, each of which presents at least one sequence synchronized by a clock signal (SCL) supplied by the bus when the circuit is in its first state, and produces, at an output ($QR_8$) located at a downstream end, an end-of-sequence acknowledge signal (ACN) which is applied to the input (D) of a first control flip-flop ($DC_1$) which is synchronized (CK) by said clock signal (SCL) and whose output (Q) synchronizes (CK) a second control or pointer flip-flop (PNT) whose inverted output (P) is looped to its input (D), in that the presence of a logic level "1" at the output (Q) of the first flip-flop ($DC_1$) and at the output (P) of the pointer (PNT) enables initialisation of said register, for example by setting its first flip-flop to the state "1" and resetting of its other flip-flops to zero, in that it comprises a logic comparator (10, 11, 12) which identifies, in a given part of an address sequence, series logic information supplied by the bus if said address sequence corresponds to said displayed address, and which produces an identification logic signal (DVA), in that it comprises a circuit (66, 67) for storing said identification signal (DVA), and in that it comprises an AND-gate (33) enabling the loading into the memory (M) of the data from the register (R) when the output (Q) of the first control flip-flop (DC1) and of the pointer (PNT) are in the logic state "1", when a stored identification signal (ADC) is present and also a said end-of-sequence acknowledge signal (ACN), which thus corresponds to the end of a data sequence which follows said address sequence.

5. An interface circuit as claimed in Claim 4, characterized in that it is designed so that it produces said initialisation by setting the first flip-flop ($R_0$) of the register (R) to state "0" and by the resetting of its other flip-flops ($R_1$...$R_8$) to zero when the output of the first control flip-flop ($DC_1$) is in the state "1" and the output (Q) of the pointer (PNT) in the state zero.

6. An interface circuit as claimed in one of the Claims 4 or 5, characterized in that it comprises a third (STR) and a fourth (STP) control flip-flop which, when the interface circuit is in its first state, receive at their input (D) the clock signal (SCL) and are synchronized (CK) one by the information signal (SDA) and the other by its inverse ($\bar{S}\bar{D}\bar{A}$) so that the output (Q) of the third flip-flop (STR) is set to the state "1" by a first type of coincidence between the clock (SCL) and information (SDA) signals corresponding to the start of a said cycle, and the fourth flip-flop (STP) is set to the state "1" by a second type of coincidence between the clock (SCL) and information (SDA) signals corresponding to the end of a cycle, the third flip-flop (STR) being reset to zero by the inverse ($\bar{S}\bar{C}\bar{L}$) of the clock signal (SCL) and the fourth flip-flop (STP) by the output (Q) of the third flip-flop (STR), the output (Q) of the fourth flip-flop (STP) being designed so as to produce, when in the logic state "1", the setting to the state "1" of the first flip-flop (R) of the register (R) and the resetting to zero of its other flip-flops ($R_1$...$R_8$).

7. An interface circuit as claimed in Claim 6, characterized in that the fourth flip-flop (STP) has its output set to the logic state "1" when the stored identification signal (ADC) is in the logic state "0" and when the first flip-flop ($DC_1$) has its output in the logic state "1".

8. An interface circuit as claimed in any one of the Claims 4 to 7, characterized in that the circuit for storing the identification signal (DVA) comprises two inverting AND-gates (66, 67), the output of one of which is looped to one of the inputs of the other and vice versa, the other input of the first of the two inverting AND-gates (66) receiving the inverse ($\bar{D}\bar{V}\bar{A}$) of the identification signal (DVA), be it only if the pointer (PNT) has its input in the logic state "0" and if the clock signal is in the logic state "1", the other input of the second of the two inverting AND-gates (67) receiving the logic product of the inverses (P) of the outputs (Q) of the third (STR) and the fourth (STP) flip-flop so as to permit the storage (ADC) of the identification signal (DVA) during each cycle.

9. An interface circuit as claimed in Claim 3, in combination with any one of the Claims 6 to 8, characterized in that the fourth flip-flop (STP) also has its output set to the logic state "1" by said pulse (PON), its output, however, being self-maintained when it is in the state "1".

10. An interface circuit as claimed in anyone of the Claims 7 to 9, characterized in that it is designed so that the fourth flip-flop (STP) also has its output set to the logic state "1" when the outputs from the first ($DC_1$) and the second flip-flop (PNT) and the clock signal (SCL) all have the logic level "1".

11. An interface circuit as claimed in any one of the Claims 4 to 10, characterized in that it includes an acknowledge flip-flop ($R_9$) which is synchronized by the clock signal (SCL) and which receives at its input the logic product of the acknowledge signal (ACN) and the stored identification signal (ADC), and produces at its output an authorisation signal (ACK) directed towards the bus.

12. An interface circuit as claimed in the Claims 3 and 11 taken together, characterized in that it is designed so that said pulse also produces the resetting to zero of the acknowledge flip-flop ($R_9$).

13. An interface circuit as claimed in the Claims 3, 4 and 6 taken together, characterized in that it is designed so that said pulse also produces the resetting to zero of the first control flip-flop ($DC_1$) and the setting to the state "1" of the fourth control flip-flop (STP).

14. An interface circuit as claimed in any one of the Claims 6 to 13, characterized in that it is designed so that it produces an initialization of the register (REG) when at least one of the third (STR) and fourth (STP) control flip-flops has its output (Q) in the state "1".

15. An interface circuit as claimed in any one of the preceding Claims, characterized in that it comprises two logic inputs ($L_1$, $L_2$) which are capable of being connected, in the first state of the circuit, to a bus which supplies an information signal (SCL) and a clock signal (SDA), and in that the memory (M) comprises a plurality of memory flip-flops ($M_0$...$M_7$), in that the first series of logic gates (80...87) of the pointer circuit (SBL) comprises a third and a fourth inverting AND-gate (81, 82), one input of each of which is connected to the output of a first and second said memory flip-flop ($M_1$, $M_2$), respectively, and the other input of which receives from the second decoder (FDEC) a signal ($\bar{C}\bar{S}$) having a logic level "1" in the first state of the circuit and "0" in the second state of the circuit, the output from the third and the fourth inverting AND-gate being connected to an input of a fifth (88) and a sixth (89) inverting AND-gate, respectively, whose output is connected to the first decoder (CDEC), and in that the other input of the fifth (88) and the sixth (89) inverting AND-gate receives the output from an eighth (78) and a ninth (72) inverting AND-gate, respectively, enabling the signals (SCL, DSA) available at the logic inputs ($L_1$, $L_2$) when the circuit is in its second state.

16. An interface circuit as claimed in Claim 2 in combination with any one of the Claims 4 to 15, characterized in that said first series of logic gates (80... 87) includes a tenth inverting AND-gate (80), one input of which is connected to the output of a third memory flip-flop ($M_0$), its other input receiving from the second decocer (FDEC) a signal ($\bar{C}\bar{S}$) with a logic level 1 in the first state of the circuit and "0" in the second state, and whose output is connected to the input of a stop enabling gate (90) so that the logic stop signal (OFF) is enabled or not in accordance with the contents of the third memory flip-flop ($M_0$) when the circuit is in its first state and is always enabled in the second state.

FIG.1

A₀  A₁  A₂

AIC

DVA

QR7 ---- ---- QR1  QR0

REG

SDA

SCL

ACN      RST      ACK

BUS L      SDA

SCL

PON
LDA

PG ← V

# FIG.2

I9    I8    I7    I6    I5    I4   I3   I2   I1      A₀   S₀

109   108   107   106   105   104  103  102  101    79

C DEC 1      CS      S₁

90                                              A₁
87    86    85    84   OFF  83  82   89   88  80  70      S₂
             D₀                                  A₂

                              82   81
Q     Q     Q     Q     Q     Q    Q    Q
M7    M6    M5    M4    M3    M2   M1   M0
D R CK  D R CK  D R CK  D R CK  D R CK  D R CK  D R CK  D R CK

LDA

PON

QR7   QR6   QR5   QR4   QR3   QR2   QR1   QR0

                              CS              78   SCL

                         58

                         28            72   SDA

# FIG.3

3

FIG.4

EP 0 168 076 B1

| STA | A6 | A5 | A4 | A3 | A2 | A1 | A0 | W | AC | D7 | D6 | D5 | D4 | D3 | D2 | D1 | D0 | AC | STO |

FIG.5a

FIG.5b

EP 0 168 076 B1